# FASCICULE DE BREVET EUROPEEN

(11) **EP 1 051 422 B1**
(45) Date de publication et mention de la délivrance du brevet: **02.07.2003**
(21) Numéro de dépôt: 99901626.4
(22) Date de dépôt: 25.01.1999
(51) Int. Cl.: C07F 7/18, C08G 77/04, B01D 53/00

(54) **GEL DE SILICE INCORPORANT DES MOTIFS POLYAZACYCLOALCANES**
KIESELSÄUREGEL MIT POLYAZACYCLOALKANEINHEITEN
SILICA GEL INCORPORATING POLYAZACYCLOALKANE STRUCTURAL UNITS

(30) Priorité: 26.01.1998 FR 9800785
(43) Date de publication de la demande: 15.11.2000
(60) Demande divisionnaire: 03290616.6
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: CORRIU, Robert, F-34090 Montpellier (FR); REYE, Catherine, F-34080 Montpellier (FR); MEHDI, Ahmad, F-34090 Montpellier (FR); DUBOIS, Gérard, F-34080 Montpellier (FR); CHUIT, Claude, F-30250 Junas (FR); DENAT, Franck, F-21000 Dijon (FR); ROUX-FOUILLET, Bruno, F-21000 Dijon (FR); GUILARD, Roger, F-21121 Fontaine lès Dijon (FR); LAGRANGE, Gilles, F-91470 Forges les Bains (FR); BRANDES, Stéphane, F-21100 Dijon (FR)
(74) Mandataire: Conan, Philippe Claude
(86) Numéro de dépôt international: FR9900142
(87) Numéro de publication internationale: WO99037656

(56) Documents cités:
- WO-A-99/37399
- LUITJES, HENDRIKUS ET AL: "Reactions of the butyllithiums with tertiary oligoethylenepolyamines" TETRAHEDRON (1997), 53(29), 9977-9988 CODEN: TETRAB;ISSN: 0040-4020,1997, XP002075423
- GROS, C. ET AL.: "new silica-gel-bound polyazacycloalkanes and characterization of their copper(ii9 complexes using electron spin resonance spectroscopy" JOURNAL OF THE CHEMICAL SOCIETY, DALTON TRANSACTIONS,1996, pages 1209-1214, XP002075424 cité dans la demande
- BATTIONI ET AL CHEM. COMM. 1996, pages 2037 - 2038
- DUDLER ET AL AUST. J. CHEM. vol. 40, 1987, pages 1557 - 1563

## Description

L'invention a pour objet un nouveau matériau, utilisable dans le domaine de la séparation et de la purification des gaz. Les techniques actuelles de séparation, que ce soit la distillation cryogénique ou l'adsorption sur zéolithes et les techniques de purification par distillation cryogénique ou catalytique des gaz industriels, ne sont pas toujours optimisées, ni en terme économique ni en terme de pureté. De nombreux travaux ont par ailleurs montré que des gaz tels que l'oxygène, l'hydrogène ou le monoxyde de carbone réagissent sélectivement et réversiblement avec des complexes de métaux de transition.

Ainsi, les complexes de cobalt (II) du cyclame ou du cyclène fixent aisément l'oxygène de l'air (Machida R., Kimura E., Kodama M., Inorg. Chem. 1983, 22, 2055-2061.), et conduisent à des espèces µ-peroxydiques en milieux aqueux. Cependant, la durée de vie des complexes oxygénés en solution est limitée car ces derniers peuvent subir des réactions de dégradation irréversibles (Martell A. E., Basak A. K., Raleigh C. J., Pure Appl. Chem. 1988, 60, 1325-1329). Par ailleurs, la désoxygénation de ces espèces ne peut être réalisée par simple diminution de la pression partielle en dioxygène. Une amélioration de la réversibilité, nécessaire dans un procédé de séparation, nécessite une stabilisation de l'espèce intermédiaire superoxydique. Le greffage du ligand sur une matrice solide doit, à la fois ralentir l'évolution de l'espèce superoxydique en espèce µ-peroxydique, limiter les réactions d'hydrolyse et faciliter la manipulation du complexe actif (Tsuchida E., Nishide, H. Top. Curr. Chem. 1986, 32, 63-99). L'incorporation de complexes de cobalt avec des porphyrines, des phtalocyanines, ou des cyclidènes dans des polymères organiques ou inorganiques, comme les gels de silice, et l'étude de l'interaction de ces matériaux avec l'oxygène, a déjà fait l'objet de plusieurs travaux. Le plus souvent, le complexe est synthétisé dans une première étape puis immobilisé sur le polymère par une liaison dative entre un atome d'azote d'un motif pyridine ou imidazole et le métal (Nishide H., Suzuki T., Kawakami H., Tsuchida E., J. Phys. Chem. 1994, 98, 5084-5088; Cameron J. H., Graham S., J. Chem. Soc. Dalton Trans. 1992, 385-391; Bowman R. G., Basolo F., Burwell Jr. R. L., J. Am. Chem. Soc. 1975, 97, 5125-5129). Une autre approche consiste à fixer dans un premier temps le ligand sur le polymère par une liaison covalente et à métaller ensuite (Wöhrle D., Gitzel J., Krawczyk G., Tsuchida E., Ohno H., Okura I., Nishisaka T., J. Macromol. Sci. Chem. 1988, A25, 1227-1254.; Barnes M. J., Drago R. S., Balkus Jr. K. J., J. Am. Chem. Soc. 1988, 110, 6780-6785). Ainsi, le greffage sur gel de silice de ligands tétraazamacrocycliques et l'étude de la métallation de ces matériaux ont été réalisés (Gros C., Rabiet F., Denat F., Brandes S., Chollet H., Guilard R., J. Chem. Soc. Dalton Trans. 1996, 1209-1214). Le processus sol-gel a été étudié en détail (Hench L. L., West J. K., Chem. Rev. 1990, 90, 33-72) et présente une importance majeure dans la chimie des matériaux. Un des principaux intérêts de ce procédé réside dans une grande homogénéité des matériaux obtenus, leur conférant ainsi des propriétés spécifiques. Les précurseurs de type alcoxyde sont parmi les plus utilisés. Ainsi, l'hydrolyse du tétraéthoxysilane en solution dans un solvant organique, un alcool par exemple, conduit à une dispersion colloïdale de particules issues de la polymérisation du précurseur appelée sol. Ce sol évolue vers la formation d'un gel. Le séchage de ce gel par évaporation conduit à un xérogel qui peut lui-même être transformé en verre ou céramique. Plus récemment, cette technique a permis l'élaboration de nouveaux matériaux hybrides organiques-inorganiques (Corriu R. J. P., Leclercq, D., Angew. Chem. Int. Ed. 1996, 35, 1420-1436; Schubert U., Hüsing N., Lorenz A., Chem. Mater. 1995, 7, 2010-2027). Le précurseur est alors un composé organique porteur d'une ou plusieurs terminaisons de type trialcoxysilyle [Si(OR₃)] ou silyle [SiH₃]. Diverses espèces organiques ont été utilisées tels des composés aromatiques, des motifs acétyléniques ou des amines linéaires et cycliques (Corriu R. J. P., Leclercq D., Angew. Chem. Int. Ed. 1996, 35, 1420-1436; Khatib I. S., Parish R. V., J. Organomet, Chem, 1989, 369, 9-16; Tsuda T., Fujiwara T., J. Chem. Soc., Chem. Commun. 1992, 1659-1661). Battioni et coll. ont incorporé par cette voie des porphyrines de manganèse et de fer dans un gel de silice et testé les propriétés catalytiques de ces nouveaux matériaux (Battioni P., Cardin E., Louloudi M., Schöllhorn B., Spyroulias G. A., Mansuy D., Traylor T. G., Chem. Commun. 1996, 2037-2038).

L'ancrage d'un complexe sur un polymère par une liaison dative entre une base et le métal, présente l'avantage d'activer le complexe et de stabiliser l'espèce superoxydique par l'encombrement de l'une des faces du complexe. Cependant, la liaison ainsi formée est faible. Le greffage du ligand par une liaison covalente conduit quant à lui à un matériau plus résistant. De façon générale, les méthodes d'incorporation des complexes de métaux de transition dans des matrices organiques ou inorganiques n'ont jusqu'ici pu conduire à des matériaux compatibles avec les exigences du génie des procédés et donc utilisables dans des procédés industriels. En particulier, les caractéristiques d'un tel matériau doivent pouvoir être ajustées en termes de surface spécifique, de porosité, que ce soit le rayon, la forme ou la distribution de la taille des pores, et de granulométrie. La demanderesse a trouvé que le matériau objet de la présente invention, permet de résoudre les problèmes exposés ci-dessus. L'invention a pour objet un composé de formule (I): 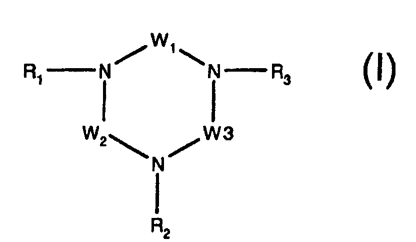 dans laquelle :
W₁, W₂ et W₃, identiques ou différents, représentent indépendamment les uns des autres, chacun un radical divalent choisi parmi ceux représentés par la formule générale (A):

   -[(CT₁T₂)ₙ-[N(R₄)]ₚ-(CT₃T₄)ₘ]ₗ- (A)
dans laquelle:
p représente un nombre entier égal à 0 ou à 1,
l représente un nombre entier égal à 1 ou à 2,
n et m, identiques ou différents, représentent chacun, indépendamment l'un de l'autre, un nombre entier inférieur ou égal à 3 et supérieur ou égal à 1,
T₁, T₂, T₃ et T₄, identiques ou différents, représentent ou bien chacun, indépendamment les uns des autres, un atome d'hydrogène, un radical alkyle, linéaire ou ramifié, comportant de 1 à 15 atomes de carbone, ou un radical [(hétéro)aryl]alkyle comportant de 7 à 12 atomes de carbone, ou bien CT₁T₂ et/ou CT₃T₄ représente un groupe divalent -(C=O)-,
R₁, R₂, R₃ et R₄ représentent un radical représenté par la formule générale (B):

   R₅-Si(X₁)(X₂)(X₃) (B)

   dans laquelle :
   X₁, X₂, et X₃, identiques ou différents, représentent chacun, indépendamment les uns des autres, un atome d'hydrogène, un atome d'halogène ou un radical OR_{6,} dans lequel
   R₆ représente un atome d'hydrogène ou un radical alkyle comportant de 1 à 4 atomes de carbone,
   R₅ représente un radical divalent dérivé d'une chaîne hydrocarbonée aliphatique saturée ou insaturée comportant de 1 à 10 atomes de carbone, dans laquelle sont éventuellement intercalés, un ou plusieurs chaînons structuraux choisis parmi le groupe arylène, ou les fragments -O-, -S-, -O-C(=O)-, -N(R₇)-C(=O)-, ou -N(R₇)-, dans lesquels R₇ représentent un atome d'hydrogène, un radical hydrocarboné aliphatique comportant de 1 à 6 atomes de carbone, un radical benzyle ou un radical phénéthyle, ladite chaîne étant non substituée ou substituée par un ou plusieurs radicaux choisis parmi les atomes d'halogène, le groupe hydroxy, les radicaux alkyle comportant de 1 à 4 atomes de carbone ou les radicaux benzyle ou phénéthyle ;
   Etant entendu que :
      Soit W₁, W₂ et W₃, identiques ou différents, représentent un radical de formule (A₁) correspondant à la formule (A), dans laquelle p est égal à 0, et la somme n + m est égale à 2 ou à 3,
      Soit W₁ représente un radical divalent de formule (A₂), correspondant à la formule (A) dans laquelle p est égal à 1, et la somme n + m est égale à 2 ou à 3, et W₂ et W₃, identiques ou différents, représentent un radical de formule (A₁),
      Soit W₁ et W₂, identiques ou différents, représentent un radical divalent de formule (A₂), correspondant à la formule (A) dans laquelle p est égal à 1, et la somme n + m est égale à 2 ou à 3 et W₃, représente un radical de formule (A₁) correspondant à la formule (A), dans laquelle p est égal à 0, et la somme n + m est égale à 2 ou à 3.

Comme composés de formule (I) comportant trois atomes d'azote cycliques, on peut citer par exemple, les composés dérivés du 1,4,7-triazacyclononane, du 1,4,7-triazacyclodécane ou du 1,5,8-triazacyclododécane. Comme composé de formule (I) comportant quatre atomes d'azote cycliques, on peut citer par exemple les composés dérivés du 1,4,7,10-tétraazacyclododécane (cyclène), du 1,4,7,10-tétraazacyclotridécane, du 1,4,7,10-tétraazacyclotétradécane, du 1,4,8,11-tétraazacyclotétradécane (cyclame), du 1,4,8,12-tétraazacyclopentadécane, du 1,5,9,13-tétraazacyclohexadécane, ou du 1,5,10,14-tétraazacyclooctadécane. Comme composés de formule (I) comportant cinq atomes d'azote cycliques, on peut citer par exemple, les composées dérivés du 1,4,7,10,13-pentaazacyclopentadécane, du 1,4,7,11,15-pentaazacyclooctadécane, ou du 1,5,9,13,17-pentaazacyclooctadécane

Comme composés de formule (I) comportant six atomes d'azote cycliques, on peut citer par exemple, les composés dérivés du 1,4,7,10,13,16-hexaazacyclooctadécane ou du 1,5,9,13,17,20-hexaazacyclotétracosane.

L'invention a plus particulièrement pour objet,
- soit le composé de formule (Ia₁), correspondant à la formule (Ia) telle que définie précédemment, dans laquelle 1 est égal à 1 et, ou bien W₁, W₂ et W₃, représentent chacun le radical divalent -CH₂-CH₂- CH₂-, ou bien l'un quelconque des trois groupes W₁ ,W₂ ou W₃ représente le radical divalent -CH₂-CH₂-CH₂-, et chacun des deux autres W₂ et W₃, représente le radical divalent -CH₂-CH₂-;
- soit le composé de formule (Ib₁), correspondant à la formule (Ib) telle que définie précédemment, dans laquelle 1 est égal à 1 et, ou bien l'un quelconque des trois groupes W₁, W₂ ou W₃ représente le radical -CH₂-CH₂-CH₂-N(R₄)-CH₂-CH₂-, l'un quelconque des deux groupes restant représente le radical -CH₂-CH₂- et le dernier groupe représente le radical -CH₂-CH₂-CH₂-, ou bien l'un quelconque des trois groupes W₁,W₂ ou W₃ représente le radical -CH₂-CH₂-CH₂-N(R₄)-CH₂-CH₂-CH₂- ,et les deux autres groupes représentent chacun le radical -CH₂-CH₂-CH₂-.

Le composé de formule (I) peut être non substitué ou substitué ; lorsqu'il est substitué, il s'agit par exemple de celui substitué par un ou plusieurs radicaux alkyle comportant de 1 à 15 atomes de carbones, les radicaux benzyle, picolyle ou phénéthyle, tel que par exemple, le 6-dodécyl 1,4,8,11-tétraazacyclotétradécane, le 3-dodécyl 1,5,9,13-tétraazacyclohexadécane, le 3-dodécyl 1,5,10,14-tétraazacyclooctadécane, le 5,5,7,12,12,14-hexaméthyl 1,4,8,11-tétraazacyclotétradécane, le 1,4,7,10,13-pentaéthyl 1,4,7,10,13,16-hexaazacyclooctadécane, le 1,4,7,10-tétraéthyl 1,4,7,10,13-pentaazacyclopentadécane, le 1-méthyl 1,4,8,11-tétraazacyclotétradécane, le 1-benzyl 1,4,8,11-tétraazacyclotétradécane, le 1-[(2-pyridyl) methyl]1,4,8,11-tétraazacyclotétradécane, le 1-[(3-pyridyl)methyl] 1,4,8,11-tétraazacyclotétradécane, ou le 1,4-dibenzyl 1,4,8,11-tétraazacyclotétradécane.

Selon un aspect particulier de la présente invention, celle-ci a pour objet, le composé de formule (I) telle que définie précédemment, dans laquelle le radical de formule (B) est un radical de formule (B₁):

-[CH₂-CH(OH)]_{y}-(CH₂)ₒ-(Q)_{q}-(CH₂)ᵣ-(Ar)ₛ-(CH₂)ₜ(U)ᵤ-(CH₂)ᵥ-Si(X)₃ (B₁),

dans lequel :
o, r, t, v, identiques ou différents, représentent chacun, indépendamment les uns des autres, un nombre entier supérieur ou égal à 0 et inférieur ou égal à 6,
y, q, s et u, identiques ou différents, représentent indépendamment les uns des autres un nombre entier supérieur ou égal à 0 et inférieur ou égal à 1,
Q et U, identiques ou différents, représentent chacun, indépendamment l'un de l'autre un atome d'oxygène, un atome de soufre ou un des groupes, -O-CO-, -CO-O-, -NH-CO-,
-CO-NH- ou -NH-,
Ar représente un groupe arylène et notamment un groupe phénylène,
X représente un atome d'hydrogène ou un des radicaux méthoxy ou éthoxy,
étant entendu,
   que lorsque q est égal à 1, la somme y + o est différente de 0,
   que lorsque q est égal à 1 et que u est égal à 0, la somme r+s+t+v est différente de 0,
   que lorsque u est égal à 1, v est différent de 0,
   que lorsque u est égal à 1 et que q est égal à 0, la somme y + o+r+s+t est différente de 0, que lorsque s est égal à 0, et que q et u sont chacun égaux à 1, la somme r + t est différente de 0, et
   que la somme y + o + r + t + v est inférieure ou égale à 12.

Dans une variante préférée de la présente invention, le radical de formule (B₁) telle que définie précédemment, est choisi parmi les radicaux 3-silyl propyle, (4-silyl phényl) méthyle, 3-(triéthoxysilyl) propyle, 3-[[3-(triéthoxysilyl)propyl] oxy] 2-hydroxy propyle, [4-[[[3-(triéthoxysilyl) propyl] amino] méthyl] phényl] méthyle, 4-[(triéthoxysilyl) phényl]propyle, 3-oxo 3-[[3-(triéthoxysilyl)propyl] oxy] propyle ou 2-oxo 2-[[3-(triéthoxysilyl) propyl] amino]éthyle.

L'invention a tout particulièrement pour objet les composés dont les noms suivent:
le 1,4,8,11-tétrakis[3-(triéthoxysilyl) propyl] 1,4,8,11-tétraazacyclotétradécane,
le 1,4,8,11-tétrakis[[4-(triéthoxysilyl) phényl]méthyl] 1,4,8,11-tétraazacyclotétradécane;
le 1,4,8,11-tétraazacyclotétradécane-1,4,8,11-tétrapropanoate de tétra[3-(triéthoxysilyl) propyle]; le 1,4,8,11-tétrakis(3-silyl propyl) 1,4,8,11-tétraazacyclotétradécane;
le 1,4,8,11-tétrakis[(4-silyl phényl)méthyl] 1,4,8,11-tétraazacyclotétradécane;
le N₁,N₂,N₃,N₄-tétrakis[3-(triéthoxysilyl)propyl] 1,4,8,11-tétraazacyclotétradécane-1,4,8,11-tétraacétamide ;
le 4,11-bis[[4-(triéthoxysilyl) phényl] méthyl] 1,4,8,11-tétraazacyclotétradécane-7,14-dione.

Selon un autre aspect de la présente invention, celle-ci a pour objet un procédé de préparation du composé de formule (I) telle que définie précédemment, caractérisé en ce que
**a)** l'on fait réagir un composé de formule (C)

   Z-R'₅-Si(X₁)(X₂)(X₃) (C)
dans laquelle :
X₁, X₂, et X₃, identiques ou différents, représentent chacun, indépendamment l'un de l'autre un atome d'hydrogène, un atome d'halogène ou un radical OR_{6,} dans lequel R₆ représente un atome d'hydrogène ou un radical alkyle comportant de 1 à 4 atomes de carbone,
R'₅ représente un radical divalent dérivé d'une chaîne hydrocarbonée aliphatique saturée ou insaturée comportant de 1 à 10 atomes de carbone, dans laquelle sont éventuellement intercalés, un ou plusieurs chaînons structuraux choisis parmi le groupe arylène, ou les fragments -O-, -S-, O-C(=O)-, -N(R₇)-C(=O)-, ou -N(R₇)-, dans lesquels R₇ représente un atome d'hydrogène, un radical hydrocarboné aliphatique comportant de 1 à 6 atomes de carbone, un radical benzyle ou un radical phénéthyle, ladite chaîne étant non substituée ou substituée par un ou plusieurs radicaux choisis parmi les atomes d'halogène, le groupe hydroxy, les radicaux alkyle comportant de 1 à 4 atomes de carbone ou les radicaux benzyle ou phénéthyle, Z représente un groupe fonctionnel capable de réagir avec un fonction amine secondaire, -NH- pour former une liaison covalente N-C, avec un composé de formule (I'): 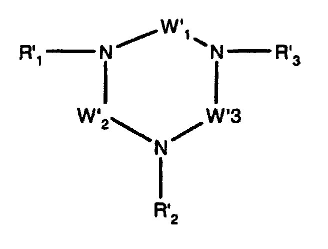
dans laquelle :
W'₁, W'₂ et W'₃, identiques ou différents, représentent indépendamment les uns des autres, chacun un radical divalent choisi parmi ceux représentés par la formule générale (A'):

   -[(CT₁T₂)ₙ-[N(R'₄)]ₚ-(CT₃T₄)ₘ]ₗ- (A')
dans laquelle,
l, p, n, m, T_{1,} T₂, T₃ et T₄ ont la même définition que pour la formule (A) telle que définie précédemment et
R'₁, R'₂, R'₃ et R'₄ représentent, un atome d'hydrogène.

Par groupe fonctionnel capable de réagir avec une amine secondaire, on désigne notamment par Z, ceux qui réagissent selon un mécanisme de substitution nucléophile tel que par exemple, les radicaux halogène et notamment les radicaux bromo ou iodo, ou ceux qui réagissent selon un mécanisme d'addition éléctrophile, tels que par exemple, la fonction époxy qui conduit à un fragment N-CH₂-CH(OH)-; il peut s'agir aussi d'une fonction carboxy libre salifiée ou estérifieé.ou d'un groupe insaturé CH₂=CH-qui conduit à un fragment N-CH₂-CH₂-, par une réaction de type « Michael », selon un mécanisme d'addition nucléophile.

Ces exemples n'ont pas de caractère limitatif et il va de soi que tout groupe fonctionnel connu de l'homme du métier à la date de dépôt de la présente demande de brevet, comme étant capable de réagir avec une fonction amine secondaire pour former une liaison covalente N-C, fait partie intégrante de la description de la présente invention.

Les composés de formule (C₁):

Z'-(CH₂)ₒ-(Q)_{q}-(CH₂)ᵣ-(Ar)ₛ-(CH₂)ₜ-(U)ᵤ-(CH₂)ᵥ-Si(X)₃ (C₁),

dans laquelle :
o, q, r, s, t, u, v, Q, Ar, U et X ont la même définition pour la formule (B₁) telle que définie précédemment,
Z' représente soit un radical halo, notamment un radical bromo ou un radical iodo, soit un groupe oxiran-2-yle, soit un groupe éthényle,
la somme q + s est égale à 0 ou à 1, étant entendu
que lorsque q est égal à 1, et que Z' représente un radical halo, o est différent de 0,
que lorsque q est égal à 1 et que u est égal à 0, la somme r+s+t+v est différente de 0,
que lorsque u est égal à 1, v est différent de 0,
que lorsque u est égal à 1 et que q est égal à 0, la somme o+r+s+t est différente de 0,
que lorsque s est égal à 0, et que q et u sont chacun égaux à 1, la somme r + t est différente de 0, et
que la somme o + r + t + v,est inférieure à 6,
et notamment le (triéthoxy) (3-iodopropyl) silane, le 2-[[[3-(triéthoxysilyl) propyl] oxy] méthyl]oxiranne, le N-[[4-(bromométhyl) phényl] méthyl] N-[3-(triéthoxysilyl) propyl] amine, le (triéthoxy) [(4-iodométhyl) phényl] silane, le propènoate de 3-(triéthoxysilyl) propyle ou le N-[3-(triéthoxysilyl) propyl] bromoacétamide, sont particulièrement apppropriés à la mise en oeuvre du procédé selon l'invention.

Selon un autre aspect de la présente invention, celle-ci a pour objet un gel de polysiloxane (III) incorporant des polyazamacrocycles et des complexes métalliques de ces ligands azotés, caractérisé en ce qu'il est susceptible d'être obtenu à partir de l'hydrolyse d'un composé de formule (I) telle que définie précédemment conduisant à la formation d'un gel de polysiloxane incorporant des motifs de polyazamacrocycles non métallés (III'), suivie de l'action d'un sel métallique sur ledit gel (III'), ainsi que le procédé de préparation du gel de polysiloxane (III) ainsi mis en oeuvre, à partir du composé de formule (I) telle que définie précédemment.

Selon un autre aspect de la présente invention, celle-ci a pour objet un gel de polysiloxane (IV) incorporant des polyazamacrocycles et des complexes métalliques de ces ligands azotés, caractérisé en ce qu'il est susceptible d'être obtenu à partir de l'action d'un sel métallique sur un composé de formule (I) telle que définie précédemment, conduisant à la formation d'un complexe organométallique dudit métal avec ledit composé de formule (I), suivie de l'hydrolyse dudit complexe organométallique, ainsi que le procédé de préparation du gel de polysiloxane (IV) ainsi mis en oeuvre, à partir du composé de formule (I) telle que définie précédemment.

Le métal intervenant dans la composition du gel de polysiloxane (III) ou (IV) est notamment choisi parmi U, Pu, Am, Eu, Ce, Cr, Gd, Mn, Fe, Co, Ni, Cu, Zn, Ag, Cd, Au, Hg ou Pb.

La présente invention a plus particulièrement pour objet les matériaux hybrides (III₁) et (IV₁), correspondant respectivement aux composés hybrides (III) et (IV) dans lequel l'élément métallique est choisi parmi le cobalt ou le cuivre; et plus particulièrement les matériaux (III₁ₐ) et (IV₁ₐ) susceptible d'être obtenu à partir d'un composé de formule (Ia), (Ib) ou (Ic).

Dans un dernier aspect de la présente invention, celle-ci a pour objet l'utilisation de ces gels hybrides métallés tels que définis précédemment, pour séparer un gaz déterminé d'un mélange de gaz; cette utilisation se caractérise par la mise en contact dudit mélange de gaz avec un des gels hybrides métallés (III) ou (IV), tels que définis précédemment, dans des conditions permettant l'absorption dudit gaz à séparer, suivie d'un phase de désorption dudit gaz fixé sur ledit gel et d'une phase de récupération dudit gaz désorbé. Cette utilisation est de préférence appliquée à la séparation de l'oxygène de l'air, soit dans le but de produire de l'oxygène pur, soit dans le but d'éliminer l'oxygène de l'air.

Les gels non métallés (III') peuvent aussi être mis en oeuvre pour purifier les gaz par adsorption des impuretés gazeuses indésirables.

Les exemples suivants illustrent l'invention et notamment les deux voies de synthèse précédemment décrites, selon un procédé sol-gel, de nouveaux polysiloxanes incorporant des polyazacycloalcanes et des complexes métalliques de ces ligands azotés.

Comme le montrent ces exemples, la diversité des précurseurs utilisés, l'addition éventuelle de tétraalkoxysilane lors de l'étape de gélification, les variations dans les conditions opératoires, permettent d'obtenir des matériaux de composition et de texture variables, tant en termes de concentration de ligand ou de complexe dans le solide, que de porosité et surface spécifique. Dans des conditions de synthèse rigoureusement identiques, les solides obtenus présentent des caractéristiques identiques, montrant ainsi une bonne reproductibilité de la méthode.

Les avantages de cette méthode résident donc essentiellement dans la possibilité d'ajuster les caractéristiques du matériau en fonction des exigences du génie des matériaux.

### Partie expérimentale

Différents gels de silice ont été synthétisés en choisissant le 1,4,8,11-tétraazacyclotétradécane (ou cyclame) comme ligand organique pour la coordination de l'élément métallique. Les différents précurseurs ont été obtenus, selon le schéma suivant, par action du cyclame sur quatre équivalents de différents réactifs silylés de formule (C), pour former les composés de formule (I) correspondants. Plusieurs substituants se terminant par un groupement -Si(OEt)₃ ou -SiH₃ ont été utilisés: une chaîne aliphatique, des substituants comportant un motif aromatique, une fonction ester ou amide. 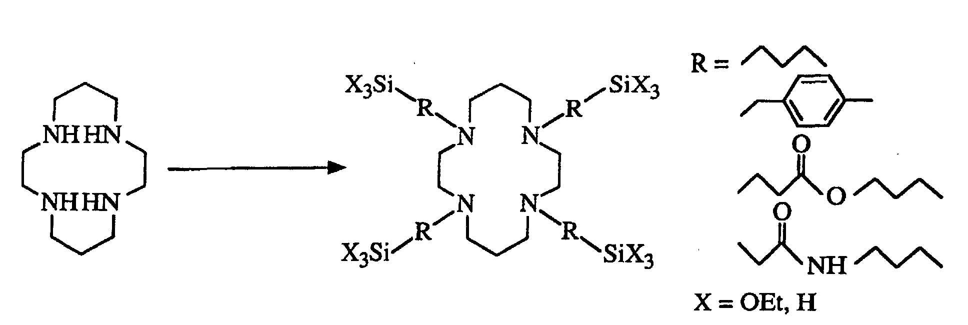 les composés suivants ont ainsi été préparés:

### Composé 1

### 1,4,8,11-tétrakis[3-(triéthoxysilyl) propyl]-1,4,8,11-tétraazacyclotétradécane

Dans un schlenk de 200 ml, sous atmosphère d'azote, on place 2 g (0,01 mole) de cyclame, 12,41 g (0,09 mole) de K₂CO₃ dans 100 ml de CH₃CN (distillé sur P₂O₅). 13,27 g (0,04 mole) de (triéthoxy) (3-iodo propyl) silane sont alors ajoutés. Le milieu réactionnel est porté au reflux pendant 12 h. Après évaporation du solvant, le résidu est repris dans 100 ml de pentane, filtré, et le précipité est lavé deux fois avec 30 ml de pentane. Les filtrats sont rassemblés, le pentane est évaporé et le composé 1 est obtenu sous forme d'une huile légèrement trouble (9,85 g, 97 %).
RMN ¹H (200 MHz, CDCl₃) δ (ppm): 0,58 (m, 8H); 1,23 (t, 36H); 1,55 (m, 12H); 2,39
(m, 8H); 2,51 (m, 8H); 2,54 (s, 8H); 3,83 (q, 24H).
RMN ¹³C (50 MHz, CDCl₃) δ (ppm): 7,0; 17,3; 19,6; 21,9; 49,5; 50,4; 57,3; 57,9.
RMN ²⁹Si (40 MHz, CDCl₃) δ (ppm): - 44,6.

| Analyse élémentaire pour C₄₆H₁₀₄N₄O₁₂Si₄ | | | |
|---|---|---|---|
| Calculé | C. 54,33 ; | H. 10,24 ; | N. 5,51 |
| Trouvé | C. 53,9; | H. 9,93 ; | N. 6,27. |

### Composé 2:

### 1,4,8,11-tétrakis[[4-(triéthoxysilyl) phényl] méthyl]-1,4,8,11-tétraazacyclotétradécane

En procédant de la même manière que pour le composé 1, à partir de 1,5 g (0,0075 mole) de cyclame, 9,32 g (0,0675 mole) de K₂CO₃ et 11,4 g (0,03 mole) de (triéthoxy) [4-(iodométhyl) phényl] silane, un solide beige est obtenu et après recristallisation dans 15 ml d'éthanol, on obtient le composé 2 sous forme d'une poudre blanche (6,5 g, 72 %).
F = 99,5-100,5 °C.
RMN ¹H (200 MHz, CDCl₃) δ (ppm): 1,29 (t, 36H); 1,77 (m, 4H); 2,54 (t, 8H); 2,63 (s, 8H); 3,46 (s, 8H); 3,90 (q, 24H); 7,34 (d, 8H); 7,60 (d, 8H).
RMN ¹³C (50 MHz, CDCl₃) δ (ppm): 18,6; 24,4; 50,8; 51,9; 59,1; 59,8; 128,8; 129,3; 135,0; 142,9.
RMN ²⁹Si (40 MHz, CDCl₃) δ (ppm): - 56,9.

| Analyse élémentaire pour C₆₂H₁₀₄N₄O₁₂Si₄ | | | |
|---|---|---|---|
| Calculé | C. 61,58; | H. 8,61; | N. 4,63. |
| Trouvé | C. 61,45; | H. 8,81; | N. 4,59. |

### Composé 3:

### 1,4,8,11-tétraazacyclotétradécane-1,4,8,11-tétrapropanoate de tétra[3-(triéthoxysilyl)propyle]

Dans un schlenk de 100 ml, sous atmosphère d'azote, on place 0,5 g (0,0025 mole) de cyclame dans 20 ml d'éthanol. 2,76 g (0,01 mole) d'acrylate de 3-(triéthoxysilyl)propyle sont alors ajoutés. Le milieu réactionnel est porté au reflux pendant 12 h. Après évaporation du solvant, on obtient une huile trouble qui est reprise dans 10 ml de pentane et laissé pendant 1 h à -20 °C. Le précipité blanc formé est filtré, le filtrat est concentré et on obtient le composé 3 sous forme d'une huile limpide (2,36 g, 72 %).
RMN ¹H (200 MHz, CDCl₃) δ (ppm): 0,51 (m, 8H); 1,24 (t, 36H); 1,44 (m, 4H); 1,61 (m, 8H); 2,35 (t, 8H); 2,41 (t, 8H); 2,44 (s, 8H); 2,61 (t, 8H); 3,69 (q, 24H); 3,90 (t, 8H).
RMN ¹³C (50 MHz, CDCl₃) δ (ppm): 6,9; 18,7; 22,6; 24,5; 32,9; 50,8; 51,1; 51,5; 58,7; 66,7; 173,1.
RMN ²⁹Si (40 MHz, CDCl₃) δ (ppm):- 45,6.

| Analyse élémentaire pour C₅₈H₁₂₀N₄O₂₀Si₄ | | | |
|---|---|---|---|
| Calculé | C 53,37; | H 9,20; | N 4,29. |
| Trouvé | C 53,17; | H 9,18; | N 4,85. |

En procédant de la même manière que ci-dessus, avec l'acrylate de 2-(triéthoxysilyl) éthyle, on obtient le 1,4,8,11-tétraazacyclotétradécane-1,4,8,11 - tétrapropanoate de tétra [2-(triéthoxysilyl) éthyle] (composé 8).

### Composé 4:

### 1,4,8,11-tétrakis(3-silylpropyl)-1,4,8,11-tétraazacyclotétradécane

Dans un Schlenk de 150 ml, sous atmosphère d'azote, on place 7,47 g (0,00735 mole) du composé obtenu à l'exemple 1, dans 40 ml d'éther anhydre. Une solution de 1,68 g (0,041 mole) de LiAlH₄ dans 30 ml d'éther anhydre est alors ajoutée goutte à goutte à 0 °C. Le milieu réactionnel est agité pendant 24 h à température ambiante, puis LiAlH₄ en excès est détruit avec 5,5 ml d'acétate d'éthyle à 0 °C. Après 30 mn à température ambiante, les solvants sont évaporés. Le résidu est repris avec du pentane, le solide est filtré, lavé deux fois avec du pentane et le composé 4 est obtenu sous forme d'une huile (2,83 g, 80 %).
RMN ¹H (200 MHz, CDCl₃) δ (ppm): 0,74 (m, 8H); 1,57 (m, 12H); 2,42 (t, 8H); 2,52 (t, 8H); *2,55* (s, 8H); 3,53 (t, 12H).
RMN ¹³C (50 MHz, CDCl₃) δ (ppm): 2,8; 21,9; 23,1; 49,5; 50,5; 56,9;
RMN ²⁹Si (40 MHz, CDCl₃) δ (ppm): - 58,7.

### Composé 5:

### 1,4,8,11-tétrakis[4-silyl phényl)méthyl]-1,4,8,11-tétraazacyclotétradécane

Dans un schlenk de 200 ml, sous atmosphère d'azote, on place 3,75 g (0,0031 mole) du composé obtenu à l'exemple 2, dans 50 ml de THF. Une solution de 0,70 g (0,018 mole) de LiAlH₄ dans 20 ml de THF est alors ajoutée goutte à goutte à 0°C. Le mélange réactionnel est agité 1 h à 0°C puis 12 h à température ambiante. L'excès de LiAlH₄ est détruit avec 3 ml d'acétate d'éthyle. Le mélange réactionnel est filtré sur 20 g de Florisil® et le solvant est évaporé. Le résidu est repris avec 50 ml de CH₂Cl₂, filtré puis le solvant est évaporé. 1,41 g du composé 5 est obtenu sous forme d'une poudre blanche (70%).
RMN ¹H (200 MHz, CDCl₃) δ (ppm): 1,77 (m, 4H); 2,55 (t, 8H); 2,63 (s, 8H); 3,45 (d, 8H); 4,23 (s, 12H); 7,32 (d, 8H); 7,51 (d, 8H).
RMN ¹³C (50 MHz, CDCl₃) δ (ppm): 25,3; 51,0; 51,9; 59,8; 126,5; 129,1; 136,1; 142,4.
RMN ²⁹Si (40 MHz, CDCl₃) δ (ppm): -59,3.

| Analyse élémentaire pour C₃₈H₅₆N₄Si₄: | | | |
|---|---|---|---|
| Calculé | C 67,06; | H 8,24; | N 8,24 |
| Trouvé | C 66,76; | H 8,00; | N 8,06. |

### Composé 6:

### N₁,N₂,N₃,N₄-tétrakis[3-(triéthoxysilyl)propyl]1,4,8,11-tétraazacyclotétra-décane-1,4,8,11-tétraacétamide

a) Dans un schlenk de 150 ml, on dissout 38,2 ml (0,16 mole) d'aminopropyltriéthoxysilane et 23,6 ml (0,17 mole) de triéthylamine dans 70 ml de CH₂Cl₂ puis on ajoute une pointe de spatule de 4-diméthylaminopyridine (DMAP). 26,95g (0,17 mole) de chlorure de bromoéthanoyle, dissous dans 20 ml de CH₂Cl₂ sont additionnés goutte à goutte à -30°C, sous agitation. La solution visqueuse et rouge obtenue est agitée 2 h à température ambiante, puis le solvant est évaporé. Le résidu est repris avec 150 ml d'éther ; les sels sont filtrés et le solvant est évaporé. On obtient 48,84 g d'un produit brun très visqueux qui, par distillation (127-132° / 0,05 mm) conduit à 11,71g (20%) de 2-bromo-N-[3-(triéthoxysilyl)propyl] acétamide
   [BrCH₂CONH(CH₂)₃Si(OEt)₃].
b) Dans un Schlenk de 60 ml, on introduit 0,5 g (0,0025 mole) de cyclame, 25 ml d'acétonitrile et 3,1 g de K₂CO₃ (0,0022 mole). 3,76 g (0,011 mole) du 2-bromo-N-[3-(triéthoxysilyl) propyl] acétamide préparé au stade a), sont ajoutés goutte à goutte sous agitation. Le mélange réactionnel est porté au reflux pendant 20 h.. Le solvant est ensuite évaporé. Le résidu est lavé avec 2 x 30 ml de pentane chaud puis il est repris avec 70 ml de CH₂Cl₂. Après filtration et évaporation de CH₂Cl₂, on récupère 1,59 g (51%) du composé 6 sous forme d'une poudre blanche.
RMN ¹H (200 MHz, CDCl₃) δ (ppm): 0,64 (t, 8H); 1,23 (t, 36H); 1,63 (m, 12H); 2,64 (m, 16H) 3,04 (s, 8H); 3,26 (m, 8H); 3,81 (q, 24H); 7,06 (m, 4H).
RMN ¹³C (50 MHz, CDCl₃) δ (ppm): 8,4; 18,7; 23,9; 24,9; 42,1; 51,4; 52,6; 58,8; 59,1; 170,9.
RMN ²⁹Si (40 MHz, CDCl₃) δ (ppm): -45,8.

| Analyse élémentaire pour C₅₄H₁₁₆N₈O₁₆Si₄ | | | |
|---|---|---|---|
| Calculé | C 52,09; | H 9,32; | N 9,00. |
| Trouvé | C 49,55; | H 8,78; | N 9,34. |

L'hydrolyse de ces composés de formule (I) selon la voie A ou des complexes métalliques correspondant (voie B) conduit à des solides (III) et (IV) présentant des textures différentes: 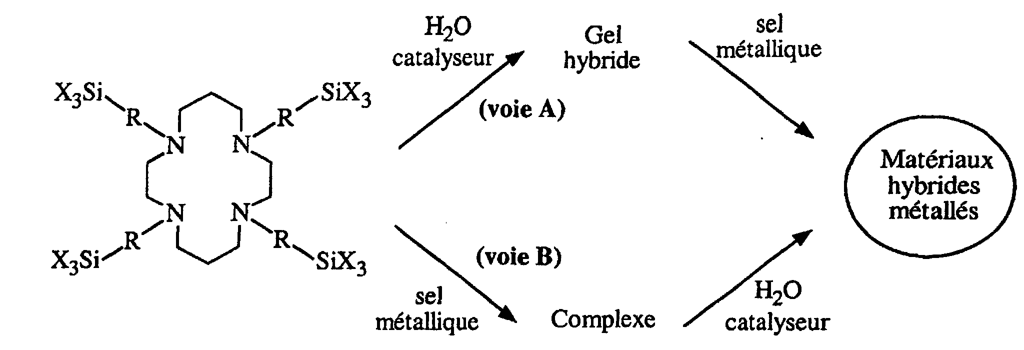 La co-gélification a été réalisée afin d'étudier l'influence de l'addition de Si(OEt)₄ dans des proportions variables sur la texture du matériau obtenu. Les autres facteurs de gélification étudiés sont la nature du solvant (MeOH, EtOH, THF, CH₂Cl₂, HCONH₂), la concentration du précurseur (0,05 à 4 moles/dm³), la présence ou l'absence de catalyseur (NH₃ ou fluorure de tétraalkylammonium tel que TBAF) et la température (-20°C à 150°C). Les résultats sont consignés dans le tableau 1 suivant; ils montrent que suivant les conditions de gélification, on obtient des gels plus ou moins condensés, cette propriété étant déduite d'une étude par RMN ²⁹Si à l'état solide; le degré de condensation augmente dans l'ordre T⁰ < T¹ < T² < T³ (Shea K. J., Loy D. A., Webster O. W.; Chem mater, 1989, 1, 572-574).Ils montrent aussi, par une analyse BET, que ces gels, plus ou moins condensés, présentent des surfaces spécifiques et des porosités différentes.

Dans le cas d'un précurseur de formule (I) comportant plusieurs atomes d'azote cycliques substitués par un radical de formule générale (B), telle que définie précédemment, on prépare aussi des co-gels par addition de tétraalkoxysilanes, tels que par exemple, le tétraéthoxysilane.

**Tableau 1 :**

| facteurs influençant la texture de gels obtenus par hydrolyse (6H₂O) de | | | | |
|---|---|---|---|---|
| **Influence du solvant** (1M / TBAF / 20°C) | | | | |
| (a) | EtOH | 17 min | 370 m²/g | T³ > T² |
| (b) | THF | 27 min | 343 m²/g | |
| (c) | HCONH₂ | 30 min | 2 m²/g | |
| (d) | CH₂Cl₂ | 55 min | 454 m²/g | |
| | | | | |

| **Influence de la concentration** (EtOH / TBAF / 20°C) | | | | |
|---|---|---|---|---|
| (a) | 1 M | 17 min | 370 m²/g | T³ > T² |
| (e) | 2 M | 10 min | 470 m²/g | T³ ∼ T² |
| (f) | 3 M | 7 min | 414 m²/g | T³ > T² |
| | | | | |

| **Influence du catalyseur** (EtOH / 1M / 20°C) | | | | |
|---|---|---|---|---|
| (g) | sans | 36 h | 2 m²/g | T⁰ > T¹∼T²∼T³ |
| (a) | TBAF | 17 min | 370 m²/g | T³ > T² |
| (h) | TBAF (sono) | 15 min | 410 m²/g | T³ > T⁰∼T¹∼T² |
| (i) | NH₃ | < 24 h | 0 m²/g | |
| | | | | |

| **Influence de la température** (EtOH / TBAF / 1 M) | | | | |
|---|---|---|---|---|
| (a) | 20°C | 17 min | 370 m²/g | T³ > T² |
| (j) | 100°C | < 30 min | ∼800 m²/g | |
| | | | | |

| **Dilution par *n* Si(OEt)** _{**4**} (EtOH / TBAF / 1 M / 20°C) | | | | |
|---|---|---|---|---|
| (a) n=0 | 17 min | 370 m²/g | | T³ > T² |
| (k) n=1 | < 30 min | 386 m²/g (292 ^{a}+ 95^{b}) | | T³ > T² Q³=Q⁴ |
| (l) n=2 | < 30 min | 428 m²/g (290 ^{a}+ 138^{b}) | | T³ < T² Q³=Q⁴ |
| (m) n=5 | < 30 min | 515 m²/g (299 ^{a}+ 216^{b}) | | |
| Si(OEt)₄ | 3 - 4 h | 470 m²/g (296 ^{a}+ 174^{b}) | | |

| | | | | |
|---|---|---|---|---|
| ^{a}Surface microporeuse | | | | |
| ^{b}Surface externe | | | | |

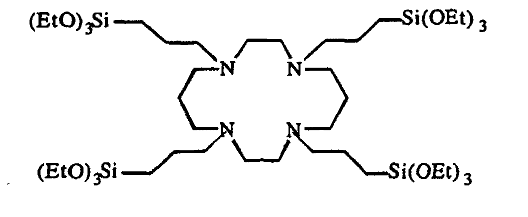

Des matériaux de textures différentes ont été obtenus à partir des composés précurseurs (1) à (6). Suivant les conditions expérimentales (précurseur de départ, température, solvant, catalyseur) il a été possible d'obtenir des matériaux avec des surfaces spécifiques déterminées allant de 10 m² / g. à 800 m² / g, les solides pouvant être microporeux, mésoporeux ou les deux à la fois. Les résultats sont consignés dans le tableau 2:

**Tableau 2 :**

| influence de la nature des substituants sur la texture du matériau | | | | | |
|---|---|---|---|---|---|
| composé précurseur | 20°C/EtOH | 20°C/THF | 20°C/CH₂Cl₂ | 100°C/EtOH | 100°C/CH₂Cl₂ |
| (1) | 370m²/g | 350m²/g | 460m²/g | 800m²/g | |
| | micropores | micropores | micropores | micropores | - |
| | gel (a) | gel (b) | gel (d) | gel (j) | |
| (2) | | | 200m²/g | | 400m²/g |
| | <10m²/g | - | micropores mésopores | - | gel (r₂) |
| | | | gel (r₁) | | |
| (3) | | | | | |
| | <10m²/g | - | - | - | - |
| | gel (s) | | | | |
| (6) | | | | | |
| | <10m²/g | - | - | - | - |
| | gel (t) | | | | |
| (4) | | 350m²/g | | | |
| | - | micropores mésopores | - | - | - |
| | | gel (u) | | | |
| (5) | | | | | |
| | - | <10m²/g | - | - | - |
| | | gel (v) | | | |

Plusieurs sels métalliques ont été utilisés pour la métallation, avant ou après gélification. Il s'agit de Cu(OAc)₂, CuCl₂, Cu(BF₄)₂, Cu[B(C₆H₅)₄]₂, Cu[(PF₆)]₂, CuSiF₆, Co(OAc)₂, CoCl₂, Co(BF₄)₂, Co[B(C₆H₅)₄]₂, Co[PF₆]₂, et CoSiF₆. La quantité de métal dans les gels métallés a été déterminée par spectroscopie de fluorescence X. Les résultats sont consignés dans les tableaux 3 à 6.

**Tableau 3 :**

| Métallation des gels et co-gels par CuCl₂ (Voie A) | | | | |
|---|---|---|---|---|
| Gel | Surface spécifique avant métallation (m²/g) | Stoechiométrie ligand/métal | Surface spécifique après métallation (m²/g) | [Cu⁺⁺] (mmol/g) |
| gel (j) | 800 (mésopores) | 1/2 | 80 | 1,33 |
| gel (j) | 800 | 1/1 | 250 | 0,83 |
| gel (a) | 370 (micropores) | 1/2 | <10 | 1,31 |
| gel (a) | 370 | 1/1 | <10 | 1,02 |
| gel (g) | <10 | 1/2 | <10 | 1,33 |
| gel (g) | <10 | 1/1 | <10 | - |
| gel (k) | 390 | 1/2 | <10 | 1,46 |
| gel (l) | 430 | 1/2 | <10 | 1,25 |
| gel (m) | 510 | 1/2 | 15 | 0,74 |
| gel (n) | 690 | 1/2 | 550 | 0,59 |
| gel (n) | 690 | 1/1 | 625 | - |
| gel (o) | 690 | 1/2 | 410 | - |
| gel (o) | 690 | 1/1 | 550 | - |
| gel (p) | 470 | 1/2 | 450 | 0 |
| gel (r) | 400 | 1/1 | <10 | 0,92 |
| gel (r) | 200 | 1/2 | <10 | 1,59 |
| gel (u) | 350 | 1/2 | 100 | 1,78 |
| gel (v) | <10 | 1/2 | <10 | 0,55 |

**Tableau 4 :**

| métallation des gels par différents sels de Cu (II) (influence du contre-ion) (voie A) | | | | |
|---|---|---|---|---|
| Gel | Surface spécifique avant métallation (m²/g) | sel métallique | Surface spécifique après métallation (m²/g) | [Cu⁺⁺] (mmol/g) |
| gel (j) | 800 (mésopores) | CuCl₂ | 250 | 0,83 |
| gel (j) | 800 (mésopores) | CuSiF₆ | <10 | - |
| gel (j) | 800 (mésopores) | Cu(OAc)₂,H₂O | 280 | 0,85 |
| gel (a) | 370 (micropores) | CuCl₂ | <10 | 1,02 |
| gel (a) | 370 (micropores) | CuSiF₆ | <10 | - |
| gel (a) | 370 (micropores) | Cu(OAc)₂,H₂O | <10 | - |
| gel (a) | 370 (micropores) | 2Cu(OAc)₂, 2H₂O | <10 | 1,27 |
| gel (g) | <10 | CuCl₂ | <10 | - |
| gel (g) | <10 | CuSiF₆ | <10 | - |
| gel (g) | <10 | Cu(OAc)₂,H₂O | <10 | - |
| gel (g) | <10 | 2Cu(OAc)₂, 2H₂O | <10 | 1,44 |

**Tableau 5 :**

| Métallation des gels et co-gels par CuCl₂ (Voie A) | | | | |
|---|---|---|---|---|
| Gel | Surface spécifique avant métallation (m²/g) | Stoechiométrie ligand/métal | Surface spécifique après métallation (m²/g) | [Co⁺⁺] (mmol/g) |
| gel (j) | 800 (mésopores) | 1/2 | 500 | 1,38 |
| gel (j) | 800 (mésopores) | 1/1 | 600 | 0,95 |
| gel (a) | 370 (micropores) | 1/2 | <10 | - |
| gel (a) | 370 (micropores) | 1/1 | 200 | 0,95 |
| gel (m) | 510 | 1/2 | 320 | 0,86 |
| gel (r) | 200 | 1/2 | 100 | 1,5 |
| gel (r) | 200 | 1/1 | - | 0,66 |
| gel (u) | 350 | 1/2 | 250 | 1,62 |
| gel (v) | <10 | 1/2 | <10 | 1,56 |

**Tableau 6 :**

| Gélification à 20°C de précurseurs complexés (voie B) | | | |
|---|---|---|---|
| composé précurseur | métal du complexe : composé précurseur/métal | Surface spécifique (m²/g) | [Métal] (mmol/g) |
| composé 1 | Cu | <10 | 0,95 |
| composé 1 | Co | 10-20 | 0,90 |
| composé 2 | Cu | <10 | 0,97 |

Les conditions expérimentales générales sont les suivantes:

### Métallation des précurseurs

La métallation des précurseurs est réalisée avec un ou deux équivalent(s) de sel métallique au reflux pendant 24 h. Les solides obtenus sont lavés avec du pentane, puis séchés sous vide.

### Synthèse des gels

Dans un pillulier, on place dans l'ordre suivant le précurseur, le solvant, la quantité nécessaire d'eau et le catalyseur. Le temps de gélification t_{g} est mesuré à partir de l'instant ou tous les réactifs ont été introduits. Trois traitements différents ont ensuite été appliqués au gels obtenus:
a) vieillissement 5 jours à température ambiante,broyage pendant 1 mn, lavages à l'éthanol et à l'éther diéthylique; puis séchage à 120 °C / 3-20 mmHg (399-2666 Pa) pendant 12 h
b) vieillissement 2 jours à température ambiante puis même traitement que a)
c) vieillissement 5 jours à 100 °C (gélifications en tubes scellés) puis même traitement que a)

### Métallation des gels

Les métallations sont réalisées suivant deux méthodologies :
a) Complexes de Cu(II).
   Dans un ballon de 100 ml, on place le matériau et le sel de cuivre (1 ou 2 éq.) dans 20 ml d'éthanol absolu. Le milieu réactionnel est porté au reflux pendant 12 h, le matériau métallé est filtré, lavé avec de l'éthanol et de l'éther diéthylique et enfin séché à 120 °C / 3-20 mmHg pendant 12 h.
b) Complexes de Co(II).
   Dans un schlenk de 100 ml, sous atmosphère d'azote, on place le matériau et le sel de cobalt (1 ou 2 éq.) dans 20 ml d'éthanol distillé. Le milieu réactionnel est porté au reflux pendant 12 h, le matériau métallé est filtré, lavé avec de l'éthanol

### Gélification des précurseurs métallés.

Les présurseurs métallés sont gélifiés suivant un mode opératoire identique à la gélification des précurseurs non métallés.

Lors des étapes de gélification décrites ci-dessus, on utilise généralement les solvants suivants :
- Le diméthylformamide (DMF), l'éthanol, le méthanol, le tétrahydrofuranne (THF) l'acétonitrile, le dioxanne de l'acide acétique ;
- Le catalyseur est généralement choisi parmi les catalyseurs acide (H⁺) basique (OH⁻) ou nucléophile tel que le F sous forme de fluorure d'amonium ou de fluorure de tétrabutylammonium, le N, N-diméthylamino pyridine (DMAP), le N-méthylimidazole ou l'hexaméthyl phosphoramide (HMPA).
Plusieurs tests d'oxygénation sur des gels métallés ont été réalisés en utilisant un banc d'adsorption automatique basé sur le principe de la volumétrie. les résultats sont consignés dans le tableau 7.

**Tableau 7**

| Gel | Sel métallique Stoechiométrie ligand/métal | Surface spécifique (m²/g) | [Co⁺⁺] (mmol/g) | Vol O₂ adsorbé (Ncc/g) |
|---|---|---|---|---|
| gel (o) | CoCl₂ 1/1 | 690 | 0,19 | 1,23 |
| gel (a) | CoCl₂ 1/1 | 600 | 0,95 | 1,70 |
| gel (j) | CoCl₂ 1/1 | 200 | 0,95 | 2,30 |
| | | | | |

Une nouvelle série de gels et/ou co-gels a été préparée, et la réactivité de ces matériaux vis-à-vis du dioxygène et du diazote a été étudiée en mesurant l'adsorption à 294K desdits gaz par la décroissance de la pression à volume constant, à l'aide d'un banc d'adsorption Micromeritics TM.
Les résultats sont consignés dans le tableau suivant :

**Tableau 8**

| Précurseur | Gel (BET en m².g⁻¹) | Métal | Contre-ion | Dégazage 10⁶ torr | N₂ Ncc/g | O₂ Ncc/g | [M²⁺] mmol/g | Sélectivité O₂/N₂ |
|---|---|---|---|---|---|---|---|---|
| Composé (1) | (1a) (480, (méso)) | Cu²⁺ | 2 Cl⁻ | 1er cycle: | 0,40 | 6,19 | | 15,5 |
| | | | | 20°C, 24h | | | 0,86 | |
| | | | | 2ème cycle: | | 1,57 | | 3,9 |
| | | | | 20°C, 3h | | | | |
| Composé (1) | (1b) (75, (méso)) | Cu²⁺ | 2 Cl⁻ | 1er cycle: | 0,18 | 4,61 | 1,00 | 25,6 |
| | | | | 20°C, 24h | | | | |
| | | | | 2ème cycle: | | 2,50 | | 13,8 |
| | | | | 20°C, 18h | | | | |
| Composé (1) | (1c) | Cu²⁺ | 2 Cl⁻ | 1er cycle: | 0,40 | 7,01 | | 17,5 |
| | | | | 20°C, 24h | | | | |
| | | | | 2ème cycle: | nd. | 11,07 | | 27,6 |
| | | | | 120°C, 24h | | | 1,12 | |
| | | | | 3ème cycle: | 0,35 | 7,20 | | 20,6 |
| | | | | 120°C, 24h | | | | |
| | | | | | | | | |
| Composé (1) + 10 Si(OEt)₄ | (1d) | 1/2 Cu²⁺ | Cl⁻ | 1er cycle: | 0,45 | 0,47 | 0,21 | 1 |
| | | | | 20°C, 24h | | | | |
| | | | | 2ème cycle: | 0,54 | 0,75 | | 1,38 |
| | | | | 120°C, 24h | | | | |
| Composé (1) | (1e) | Co²⁺ | 2 Cl⁻ | 1er cycle: | 0,51 | 0,51 | | 1 |
| | | | | 20°C, 24h | | | 1,49 | |
| | | | | 2ème cycle: | 0,41 | 0,43 | | 1 |
| | | | | 120°C, 24h | | | | |
| Composé (1) | (1f) ((417, (méso)) | 1/2 Co²⁺ | Cl⁻ | 20°C, 24h | 0,61 | 0,66 | 1,05 | 1,08 |
| Composé (2) | (2a) | Co²⁺ | Cl⁻ | 20°C, 24h | Nd | 0.66 | 1,64 | nd |

## Revendications

1. Composé de formule (I): 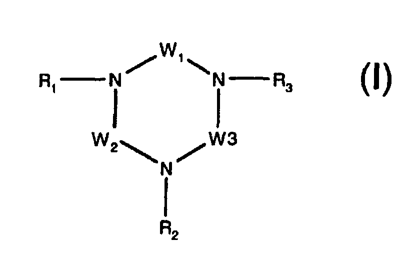 dans laquelle :
W₁, W₂ et W₃, identiques ou différents, représentent indépendamment les uns des autres, chacun un radical divalent choisi parmi ceux représentés par la formule générale (A):
-[(CT₁T₂)ₙ-[N(R₄)]ₚ-(CT₃T₄)ₘ]ₗ- (A)
dans laquelle:
p représente un nombre entier égal à 0 ou à 1,
l représente un nombre entier égal à 1 ou à 2,
n et m, identiques ou différents, représentent chacun, indépendamment l'un de l'autre, un nombre entier inférieur ou égal à 3 et supérieur ou égal à 1,
T₁, T₂, T₃ et T₄, identiques ou différents, représentent ou bien chacun, indépendamment les uns des autres, un atome d'hydrogène, un radical alkyle, linéaire ou ramifié, comportant de 1 à 15 atomes de carbone, ou un radical [(hétéro)aryl]alkyle comportant de 7 à 12 atomes de carbone, ou bien CT₁T₂ et/ou CT₃T₄ représente un groupe divalent (C=O)-,
R₁, R₂, R₃ et R₄ représentent un radical représenté par la formule générale (B)
R₅-Si(X₁)(X₂)(X₃) (B)
dans laquelle:
X₁, X₂, et X₃, identiques ou différents, représentent chacun, indépendamment les uns des autres, un atome d'hydrogène, un atome d'halogène ou un radical OR_{6,} dans lequel
R₆ représente un atome d'hydrogène ou un radical alkyle comportant de 1 à 4 atomes de carbone,
R₅ représente un radical divalent dérivé d'une chaîne hydrocarbonée aliphatique saturée ou insaturée comportant de 1 à 10 atomes de carbone, dans laquelle sont éventuellement intercalés, un ou plusieurs chaînons structuraux choisis parmi le groupe arylène, ou les fragments -O-, -S-, -O-C(=O)-, -N(R₇)-C(=O)-, ou -N(R₇)-, dans lesquels R₇ représentent un atome d'hydrogène, un radical hydrocarboné aliphatique comportant de 1 à 6 atomes de carbone, un radical benzyle ou un radical phénéthyle, ladite chaîne étant non substituée ou substituée par un ou plusieurs radicaux choisis parmi les atomes d'halogène, le groupe hydroxy, les radicaux alkyle comportant de 1 à 4 atomes de carbone ou les radicaux benzyle ou phénéthyle;
Etant entendu que:
Soit W₁, W₂ et W₃, identiques ou différents, représentent un radical de formule (A₁) correspondant à la formule (A), dans laquelle p est égal à 0, et la somme n + m est égale à 2 ou à 3,
Soit W₁ représente un radical divalent de formule (A₂), correspondant à la formule (A) dans laquelle p est égal à 1, et la somme n + m est égale à 2 ou à 3, et W₂ et W₃, identiques ou différents, représentent un radical de formule (A₁),
Soit W₁ et W₂, identiques ou différents, représentent un radical divalent de formule (A₂), correspondant à la formule (A) dans laquelle p est égal à 1, et la somme n + m est égale à 2 ou à 3 et W₃, représente un radical de formule (A₁) correspondant à la formule (A), dans laquelle p est égal à 0, et la somme n + m est égale à 2 ou à 3.

2. Composé de formule (Ia1), correspondant à la formule (I) telle que définie à la revendication 1, dans laquelle 1 est égal à 1 et, ou bien W₁, W₂ et W₃, représentent chacun le radical divalent -CH₂-CH₂-CH₂-, ou bien l'un quelconque des trois groupes W₁, W₂ ou W₃ représente le radical divalent -CH₂-CH₂-CH₂-, et chacun des deux autres W₂ et W₃, représente le radical divalent -CH₂-CH₂-.

3. Composé de formule (Ib1), correspondant à la formule (I) telle que définie à la revendication 1, dans laquelle 1 est égal à 1 et, ou bien l'un quelconque des trois groupes W₁, W₂ ou W₃ représente le radical -CH₂-CH₂-CH₂-N(R₄)-CH₂-CH₂-, l'un quelconque des deux groupes restants représente le radical -CH₂-CH₂- et le dernier groupe représente le radical -CH₂-CH₂-CH₂-, ou bien l'un quelconque des trois groupes W₁ ,W₂ ou W₃ représente le radical -CH₂-CH₂-CH₂-N(R₄)-CH₂-CH₂-CH₂- ,et les deux autres groupes restants représentent chacun le radical -CH₂-CH₂-CH₂-.

4. Composé de formule (I) telle que définie à l'une quelconque des revendications 1 à 3, dans laquelle le radical de formule (B), est un radical de formule (B₁):
-[CH₂-CH(OH)]_{y}-(CH₂)ₒ-(Q)_{q}-(CH₂)ᵣ-(Ar)ₛ-(CH₂)ₜ-(U)ᵤ-(CH₂)ᵥ-Si(X)₃ (B₁),
dans lequel:
o, r, t, v, identiques ou différents, représentent chacun, indépendamment les uns des autres, un nombre entier supérieur ou égal à 0 et inférieur ou égal à 6,
y, q, s et u, identiques ou différents, représentent indépendamment les uns des autres un nombre entier supérieur ou égal à 0 et inférieur ou égal à 1,
Q et U, identiques ou différents, représentent chacun, indépendamment l'un de l'autre un atome d'oxygène, un atome de soufre ou un des groupes, -O-CO-, -CO-O-, -NH-CO-,
-CO-NH- ou -NH-,
Ar représente un groupe arylène et notamment un groupe phénylène,
X représente un atome d'hydrogène ou un des radicaux méthoxy ou éthoxy,
étant entendu:
que lorsque q est égal à 1, la somme y + o est différente de 0,
que lorsque q est égal à 1 et que u est égal à 0, la somme r+t+s+v est différente de 0,
que lorsque u est égal à 1, v est différent de 0,
que lorsque u est égal à 1 et que q est égal à 0, la somme y + o+r+s+t est différente de 0, que lorsque s est'égal à 0, et que q et u sont chacun égaux à 1, la somme r + t est différente de 0.

5. Composé de formule (I) telle que définie à la revendication 4, dans laquelle le radical de formule (B₁) est choisi parmi les radicaux 3-silyl propyle, (4-silyl phényl) méthyle, 3-(triéthoxysilyl) propyle, 3-[[3-(triéthoxysilyl) propyl] oxy] 2-hydroxy propyle, [4-[[[3-(triéthoxysilyl) propyl] amino] méthyl] phényl] méthyle, 4-[(triéthoxysilyl) phényl] propyle, 3-oxo 3-[[3-(triéthoxysilyl) propyl] oxy] propyle ou 2-oxo 2-[[3-(triéthoxysilyl) propyl] amino] éthyle.

6. Composés de formule (I) telle que défine à l'un des revendications 1 à 5, dont les noms suivent:
le 1,4,8,11-tétrakis[3-(triéthoxysilyl) propyl] 1,4,8,11-tétraazacyclotétradécane,
le 1,4,8,11-tétrakis[[4-(triéthoxysilyl) phényl] méthyl] 1,4,8,11-tétraazacyclotétradécane;
le 1,4,8,11-tétraazacyclotétradécane-1,4,8,11-tétrapropanoate de tétra[3-(triéthoxysilyl) propyle] le 1,4,8,11-tétrakis(3-silyl propyl) 1,4,8,11-tétraazacyclotétradécane;
le 1,4,8,11-tétrakis[(4-silyl phényl) méthyl] 1,4,8,11-tétraazacyclotétradécane;
le N₁,N₂,N₃,N₄-tétrakis[3-(triéthoxysilyl) propyl] 1,4,8,11-tétraazacyclotétradécane-1,4,8,11-tétraacétamide, le 4,11-bis[[4-(triéthoxysilyl) phényl] méthyl] 1,4,8,11-tétraazacyclotétradécane-7,14-dione.

7. Procédé de préparation du composé de formule (I) telle que définie à l'une quelconque des revendications 1 à 6, **caractérisé en ce que** l'on fait réagir un composé de formule (C)
Z-R'₅-Si(X₁)(X₂)(X₃) (C)
dans laquelle:
X₁, X₂, et X₃, identiques ou différents, représentent chacun, indépendamment l'un de l'autre un atome d'hydrogène, un atome d'halogène ou un radical OR_{6,} dans lequel R₆ représente un atome d'hydrogène ou un radical alkyle comportant de 1 à 4 atomes de carbone,
R'₅ représente un radical divalent dérivé d'une chaîne hydrocarbonée aliphatique saturée ou insaturée comportant de 1 à 10 atomes de carbone, dans laquelle sont éventuellement intercalés, un ou plusieurs chaînons structuraux choisis parmi le groupe arylène, ou les fragments -O-, -S-, O-C(=O)-, -N(R₇)-C(=O)-, ou -N(R₇)-, dans lesquels R₇ représentent un atome d'hydrogène, un radical hydrocarboné aliphatique comportant de 1 à 6 atomes de carbone, un radical benzyle ou un radical phénéthyle, ladite chaîne étant non substituée ou substituée par un ou plusieurs radicaux choisis parmi les atomes d'halogène, le groupe hydroxy, les radicaux alkyle comportant de 1 à 4 atomes de carbone ou les radicaux benzyle ou phénéthyle, Z représente un groupe fonctionnel capable de réagir avec un fonction amine secondaire, -NH-, pour former une liaison covalente N-C,
avec un composé de formule (I') : 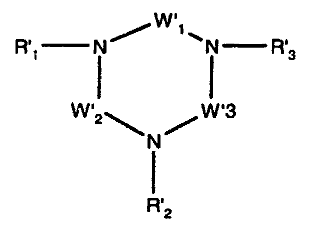
dans laquelle :
W'₁, W'₂ et W'₃, identiques ou différents, représentent indépendamment les uns des autres, chacun un radical divalent choisi parmi ceux représentés par la formule générale (A'):
-[(CT₁T₂)ₙ-[N(R'₄)]ₚ-(CT₃T₄)ₘ]ₗ- (A')
dans laquelle:
l, p, n, m, T₁, T₂, T₃ et T₄ ont la même définition que pour la formule (A) telle que définie précédemment et
R'₁, R'₂, et R'₃ et R'₄ représentent un atome d'hydrogène.

8. Variante du procédé de préparation selon la revendication 7, mis en oeuvre avec un composé de formule (C₁):
Z'-(CH₂)ₒ-(Q)_{q}-(CH₂)ᵣ-(Ar)ₛ-(CH₂)ₜ-(U)ᵤ-(CH₂)ᵥ-Si(X)₃ (C₁),
ans laquelle o, q, r, s, t, u, v, Q, Ar, U et X ont la même définition pour la formule (B₁) telle que définie précédemment,
Z' représente soit un radical halo, notamment un radical bromo ou un radical iodo, soit un groupe oxiran-2-yle, soit un groupe éthènyle,
la somme q + s est égale à 0 ou à 1, étant entendu
que lorsque q est égal à 1, et que Z' représente un radical halo, o est différent de 0,
que lorsque q est égal à 1 et que u est égal à 0, la somme r+s+t+v est différente de 0,
que lorsque u est égal à 1, v est différent de 0,
que lorsque u est égal à 1 et que q est égal à 0, la somme o+r+s+t est différente de 0,
que lorsque s est égal à 0, et que q et u sont chacun égaux à 1, la somme r + t est différente de 0, et
que la somme o + r + t + v,est inférieure à 6,
et plus particulièrement avec le (triéthoxy) (3-iodopropyl) silane, le 2-[[[3-(triéthoxysilyl) propyl] oxy] méthyl]oxiranne, le N-[[4-(bromométhyl) phényl] méthyl] N-[3-(triéthoxysilyl) propyl] amine, le (triéthoxy) [(4-iodométhyl) phényl] silane, le propènoate de 3-(triéthoxysilyl) propyle ou le N-[3-(triéthoxysilyl) propyl] bromoacétamide.

9. Gel de polysiloxane (III) d'un composé de formule (I) telle que définie à l'une des revendications 1 à 6, incorporant ledit composé et un complexe organométallique dudit composé, **caractérisé en ce qu'**il est susceptible d'être obtenu à partir de l'hydrolyse dudit composé, pour former un gel de polysiloxane non métallé (III'), suivie de l'action d'un sel métallique sur ledit gel (III'), et plus particulièrement le gel de polysiloxane (III₁) dans lequel l'élément métallique est choisi parmi le cobalt ou le cuivre.

10. Gel de polysiloxane (IV) d'un composé de formule (I) telle que définie à l'une des revendications 1 à 6, incorporant ledit composé et un complexe métallique dudit composé, **caractérisé en ce qu'**il est susceptible d'être obtenu à partir de l'action d'un sel métallique sur ledit composé conduisant à la formation d'un complexe organométallique dudit métal avec ledit composé, suivie de l'hydrolyse dudit complexe et plus particulièrement le gel de polysiloxane (IV₁) dans lequel l'élément métallique est choisi parmi le cobalt ou le cuivre.

11. Procédé de préparation du gel de polysiloxane (III) tel que défini à la revendication 9, **caractérisé en ce qu'**un composé de formule (I) est soumis à une hydrolyse conduisant au gel non métallé (III'), puis le gel (III') est mis à réagir avec un sel métallique.

12. Procédé de préparation du gel de polysiloxane (IV) tel que défini à la revendication 10, **caractérisé en ce qu'**un composé de formule (I) est mis à réagir avec un sel métallique conduisant à la formation d'un complexe organométallique dudit métal avec ledit composé, puis **en ce que** ledit complexe organométallique est soumis à une hydrolyse.

13. Variante du procédé tel que défini à l'une des revendication 11 ou 12 dans laquelle le cation métallique intervenant dans la composition du gel de polysiloxane (III) ou (IV) est choisi parmi les cations de U, Pu, Am, Eu, Ce, Cr, Gd, Mn, Fe, Co, Ni, Cu, Zn, Ag, Cd, Au, Hg ou Pb. et est de préférence un cation Cu²⁺ ou Co ²⁺

14. Utilisation des gels hybrides métallés tels que définis à l'une des revendications 9 ou 10, pour séparer un gaz déterminé d'un mélange de gaz, **caractérisée par** la mise en contact dudit mélange de gaz avec un des gels hybrides métallés (III) ou (IV), tels que définis précédemment, dans des conditions permettant l'absorption dudit gaz à séparer, suivie d'un phase de désorption dudit gaz fixé sur ledit gel et d'une phase de récupération dudit gaz désorbé.

15. Utilisation telle que définie à la revendication 14, appliquée à la séparation de l'oxygène de l'air, soit dans le but de produire de l'oxygène pur, soit dans le but d'éliminer l'oxygène de l'air.

16. Gel non métallé (III') tel que défini à la revendication 9.

17. Utilisation du gel (III') tel que défini à la revendication 9, pour purifier les gaz par adsorption des impuretés gazeuses indésirables.

## Patentansprüche

1. Verbindung der Formel (I): 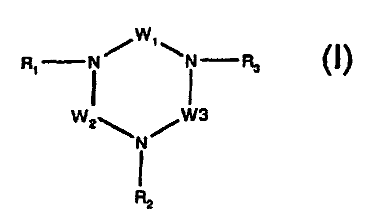 worin:
W₁, W₂ und W₃ gleich oder verschieden sind und jeweils unabhängig voneinander für einen zweiwertigen Rest stehen, der unter denjenigen der allgemeinen Formel (A) ausgewählt ist:
-[(CT₁T₂)ₙ-[N(R₄)]ₚ-(CT₃T₄)ₘ]ₗ- (A)
worin:
p für eine ganze Zahl mit einem Wert von 0 oder 1 steht,
l für eine ganze Zahl mit einem Wert von 1 oder 2 steht,
n und m gleich oder verschieden sind und jeweils unabhängig voneinander für eine ganze Zahl kleiner gleich 3 und größer gleich 1 stehen,
T₁, T₂, T₃ und T₄ gleich oder verschieden sind und entweder jeweils unabhängig voneinander für ein Wasserstoffatom, einen linearen oder verzweigten Alkylrest mit 1 bis 15 Kohlenstoffatomen oder einen [(Hetero)aryl]alkylrest mit 7 bis 12 Kohlenstoffatomen stehen oder CT₁T₂ und/oder CT₃T₄ für eine zweiwertige Gruppe -(C=O)- stehen, R₁, R₂, R₃ und R₄ für einen Rest der allgemeinen Formel (B) stehen:
R₅-Si(X₁)(X₂)(X₃) (B)
worin:
X₁, X₂ und X₃ gleich oder verschieden sind und jeweils unabhängig voneinander für ein Wasserstoffatom, ein Halogenatom oder einen Rest OR₆, worin R₆ ein Wasserstoffatom oder einen Alkylrest mit 1 bis 4 Kohlenstoffatomen bedeutet, stehen,
R₅ für einen zweiwertigen Rest steht, der sich von einer gesättigten oder ungesättigten aliphatischen Kohlenwasserstoffkette mit 1 bis 10 Kohlenstoffatomen ableitet, wobei in die Kette gegebenenfalls ein oder mehrere, unter einer Arylengruppe oder den Fragmenten -O-, -S-, -O-C(=O)-, -N(R₇)-C(=O)- oder -N(R₇)-, worin R₇ für ein Wasserstoffatom, einen aliphatischen Kohlenwasserstoffrest mit 1 bis 6 Kohlenstoffatomen, einen Benzylrest oder einen Phenethylrest steht, ausgewählte Kettenglieder eingebaut sind und die Kette gegebenenfalls durch einen oder mehrere, unter Halogenatomen, Hydroxylgruppen, Alkylresten mit 1 bis 4 Kohlenstoffatomen oder Benzyl- oder Phenethylresten ausgewählte Reste substituiert ist;
mit der Maßgabe, daß:
W₁, W₂ und W₃ gleich oder verschieden sind und für einen Rest der Formel (A₁), der der Formel (A), worin p gleich 0 ist und die Summe n + m gleich 2 oder 3 ist, entspricht, stehen
oder W₁ für einen zweiwertigen Rest der Formel (A₂), der der Formel (A), worin p gleich 1 ist und die Summe n + m gleich 2 oder 3 ist, entspricht, steht und W₂ und W₃ gleich oder verschieden sind und für einen Rest der Formel (A₁) stehen,
oder W₁ und W₂ gleich oder verschieden sind und für einen Rest der Formel (A₂), der der Formel (A), worin p gleich 1 ist und die Summe n + m gleich 2 oder 3 ist, entspricht, stehen und W₃ für einen Rest der Formel (A₁), der der Formel (A), worin p gleich 0 ist und die Summe n + m gleich 2 oder 3 ist, entspricht, steht.

2. Verbindung der Formel (Ia₁), die der Formel (I) nach Anspruch 1, worin 1 gleich 1 ist und entweder W₁, W₂ und W₃ jeweils für den zweiwertigen Rest -CH₂-CH₂-CH₂- stehen oder eine der drei Gruppen W₁, W₂ und W₃ für den zweiwertigen Rest -CH₂-CH₂-CH₂steht und die anderen beiden Gruppen W₂ und W₃ jeweils für den zweiwertigen Rest -CH₂-CH₂- stehen, entspricht.

3. Verbindung der Formel (Ib₁), die der Formel (I) nach Anspruch 1, worin 1 gleich 1 ist und entweder eine der drei Gruppen W₁, W₂ und W₃ für den Rest -CH₂-CH₂-CH₂-N(R₄)-CH₂-CH₂- steht, eine der verbleibenden beiden Gruppen für den Rest -CH₂-CH₂steht und die letzte Gruppe für den Rest -CH₂-CH₂-CH₂- steht oder eine der drei Gruppen W₁, W₂ und W₃ für den Rest -CH₂-CH₂-CH₂-N(R₄)-CH₂-CH₂-CH₂- steht und die verbleibenden beiden Gruppen jeweils für den Rest-CH₂-CH₂-CH₂- stehen, entspricht.

4. Verbindung der Formel (I) nach einem der Ansprüche 1 bis 3, worin es sich bei dem Rest der Formel (B) um einen Rest der Formel (B₁) handelt:
-[CH₂-CH(OH)]_{y}-(CH₂)ₒ-(Q)_{q}-(CH₂)ᵣ-(Ar)ₛ-(CH₂)ₜ-(U)ᵤ-(CH₂)ᵥ- Si(X)₃ (B₁),
worin:
o, r, t und v gleich oder verschieden sind und jeweils unabhängig voneinander für eine ganze Zahl größer gleich 0 und kleiner gleich 6 stehen,
y, q, s und u gleich oder verschieden sind und jeweils unabhängig voneinander für eine ganze Zahl größer gleich 0 und kleiner gleich 1 stehen,
Q und U gleich oder verschieden sind und jeweils unabhängig voneinander für ein Sauerstoffatom, ein Schwefelatom oder eine der Gruppen -O-CO-, -CO-O-, -NH-CO-, -CO-NH- oder -NH- stehen,
Ar für eine Arylengruppe und insbesondere eine Phenylengruppe steht,
X für ein Wasserstoffatom oder einen Methoxy- oder Ethoxyrest steht,
mit den Maßgaben, daß
die Summe y + o von 0 verschieden ist, wenn q gleich 1 ist,
die Summe r+t+s+v von 0 verschieden ist, wenn q gleich 1 ist und u gleich 0 ist,
v von 0 verschieden ist, wenn u gleich 1 ist,
die Summe y+o+r+s+t von 0 verschieden ist, wenn u gleich 1 ist und q gleich 0 ist,
die Summe r+t von 0 verschieden ist, wenn s gleich 0 ist und q und u jeweils gleich 1 sind.

5. Verbindung der Formel (I) nach Anspruch 4, worin der Rest der Formel (B₁) unter 3-Silylpropyl, (4-Silylphenyl)methyl, 3-(Triethoxysilyl)propyl, 3-[[3-(Triethoxysilyl)propyl]oxy]-2-hydroxypropyl, [4-[[[3-(Triethoxysilyl)propyl]amino]methyl]-phenyl]methyl, [4-(Triethoxysilyl)phenyl]propyl, 3-Oxo-3-[[3-(triethoxysilyl)propyl]oxy]propyl oder 2-Oxo-2-[[3-(triethoxysilyl)propyl]amino]ethyl ausgewählt ist.

6. Verbindung der Formel (I) nach einem der Ansprüche 1 bis 5 mit den folgenden Bezeichnungen:
1,4,8,11-Tetrakis[3-(triethoxysilyl)propyl]-1,4,8,11-tetraazacyclotetradecan,
1,4,8,11-Tetrakis[[4-(triethoxysilyl)phenyl]-methyl]-1,4,8,11-tetraazacyclotetradecan,
1,4,8,11-Tetraazacyclotetradecan-1,4,8,11-tetrapropansäuretetra[3-(triethoxysilyl)propyl]ester, 1,4,8,11-Tetrakis(3-silylpropyl)-1,4,8,11-tetraazacyclotetradecane,
1,4,8,11-Tetrakis[(4-silylphenyl)methyl]-1,4,8,11-tetraazacyclotetradecan,
N₁,N₂,N₃,N₄-Tetrakis[3-(triethoxysilyl)propyl]-1,4,8,11-tetraazacyclotetradecan-1,4,8,11-tetraacetamid,
4,11-Bis[[4-(triethoxysilyl)phenyl]methyl]-1,4,8,11-tetraazacyclotetradecan-7,14-dion.

7. Verfahren zur Herstellung einer Verbindung der Formel (I) nach einem der Ansprüche 1 bis 6, **dadurch gekennzeichnet, daß** man eine Verbindung der Formel (C)
Z-R'₅-Si(X₁)(X₂)(X₃) (C)
worin:
X₁, X₂ und X₃ gleich oder verschieden sind und jeweils unabhängig voneinander für ein Wasserstoffatom, ein Halogenatom oder einen Rest OR₆, worin R₆ ein Wasserstoffatom oder einen Alkylrest mit 1 bis 4 Kohlenstoffatomen bedeutet, stehen,
R'₅ für einen zweiwertigen Rest steht, der sich von einer gesättigten oder ungesättigten aliphatischen Kohlenwasserstoffkette mit 1 bis 10 Kohlenstoffatomen ableitet, wobei in die Kette gegebenenfalls ein oder mehrere, unter einer Arylengruppe oder den Fragmenten -O-, -S-, -O-C(=O)-, -N(R₇)-C(=O)- oder -N(R₇)-, worin R₇ für ein Wasserstoffatom, einen aliphatischen Kohlenwasserstoffrest mit 1 bis 6 Kohlenstoffatomen, einen Benzylrest oder einen Phenethylrest steht, ausgewählte Kettenglieder eingebaut sind und die Kette gegebenenfalls durch einen oder mehrere, unter Halogenatomen, Hydroxylgruppen, Alkylresten mit 1 bis 4 Kohlenstoffatomen oder Benzyl- oder Phenethylresten ausgewählte Reste substituiert ist, und
Z für eine funktionelle Gruppe steht, die mit einer sekundären Aminfunktion unter Bildung einer kovalenten N-C-Bindung reagieren kann,
mit einer Verbindung der Formel (I'): 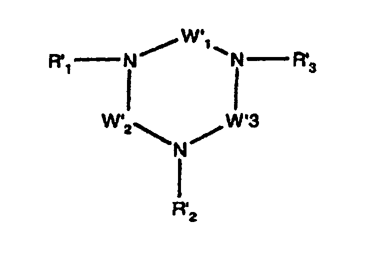
worin:
W'₁, W'₂ und W'₃ gleich oder verschieden sind und jeweils unabhängig voneinander für einen zweiwertigen Rest stehen, der unter denjenigen der allgemeinen Formel (A') ausgewählt ist:
- [(CT₁T₂)ₙ-[N(R'₄)]ₚ-(CT₃T₄)ₘ]ₗ- (A')
worin:
l, p, n, m, T₁, T₂, T₃ und T₄ die gleiche Bedeutung wie unter der Formel (A) gemäß obiger Definition besitzen und
R'₁, R'₂, R'₃ und R'₄ für ein Wasserstoffatom stehen,
umsetzt.

8. Variante des Herstellungsverfahrens nach Anspruch 7, das man mit einer Verbindung der Formel (C₁):
Z'-(CH₂)ₒ-(Q)_{q}-(CH₂)ᵣ-(Ar)ₛ-(CH₂)ₜ-(U)ᵤ-(CH₂)ᵥ-Si(X)₃ (C₁)
worin o, q, r, s, t, u, v, Q, Ar, U und X die gleiche Bedeutung wie unter der Formel (B₁) gemäß obiger Definition besitzen,
Z' entweder für Halogen, insbesondere Brom oder Iod, oder eine Oxiran-2-yl- oder eine Ethenylgruppe steht und
die Summe q + s gleich 0 oder 1 ist, mit den Maßgaben, daß
o von 0 verschieden ist, wenn q gleich 1 ist und Z' für Halogen steht,
die Summe r+s+t+v von 0 verschieden ist, wenn q gleich 1 und u gleich 0 ist,
v von 0 verschieden ist, wenn u gleich 1 ist,
die Summe o+r+s+t von 0 verschieden ist, wenn u gleich 1 ist und q gleich 0 ist,
die Summe r+t von 0 verschieden ist, wenn s gleich 0 ist und q und u jeweils gleich 1 sind und
die Summe o+r+t+v kleiner 6 ist,
und insbesondere mit (Triethoxy)(3-iodpropyl)-silan, 2-[[[3-(Triethoxysilyl)propyl]oxy]methyl]-oxiran, N-[[4-(Brommethyl)phenyl]methyl]-N-[3-(triethoxysilyl)propyl]amin, (Triethoxy)[4-(iodmethyl)phenyl]silan, Propensäure-3-(triethoxysilyl)propylester oder N-[3-(Triethoxysilyl)-propyl]bromacetamid
durchführt.

9. Polysiloxangel (III) einer Verbindung der Formel (I) nach einem der Ansprüche 1 bis 6 mit der Verbindung und einem metallorganischen Komplex der Verbindung, **dadurch gekennzeichnet, daß** es durch Hydrolyse der Verbindung zu einem nicht metallierten Polysiloxangel (III') und nachfolgende Einwirkung eines Metallsalzes auf das Gel (III') erhältlich ist, und insbesondere Polysiloxangel (III₁), worin das Metallelement unter Cobalt oder Kupfer ausgewählt ist.

10. Polysiloxangel (IV) einer Verbindung der Formel (I) nach einem der Ansprüche 1 bis 6 mit der Verbindung und einem metallorganischen Komplex der Verbindung, **dadurch gekennzeichnet, daß** es durch Einwirkung eines Metallsalzes auf die Verbindung unter Bildung eines metallorganischen Komplexes des Metalls mit der Verbindung und nachfolgende Hydrolyse des Komplexes erhältlich ist, und insbesondere Polysiloxangel (IV₁), worin das Metallelement unter Cobalt oder Kupfer ausgewählt ist.

11. Verfahren zur Herstellung eines Polysiloxangels (III) nach Anspruch 9, **dadurch gekennzeichnet, daß** man eine Verbindung der Formel (I) zu dem nicht metallierten Gel (III') hydrolysiert und dann das Gel (III') mit einem Metallsalz umsetzt.

12. Verfahren zur Herstellung eines Polysiloxangels (IV) nach Anspruch 10, **dadurch gekennzeichnet, daß** man eine Verbindung der Formel (I) mit einem Metallsalz zu einem metallorganischen Komplex des Metalls mit der Verbindung umsetzt und dann den metallorganischen Komplex hydrolysiert.

13. Variante des Verfahrens nach Anspruch 11 oder 12, bei der das an der Zusammensetzung des Polysiloxangels (III) oder (IV) beteiligte Metallkation unter den Kationen von U, Pu, Am, Eu, Ce, Cr, Gd, Mn, Fe, Co, Ni, Cu, Zn, Ag, Cd, Au, Hg oder Pb ausgewählt wird und es sich dabei vorzugsweise um ein Cu²⁺- oder Co²⁺-Kation handelt.

14. Verwendung der metallierten Hybridgele nach Anspruch 9 oder 10 zur Trennung eines vorgegebenen Gases aus einem Gasgemisch, **dadurch gekennzeichnet, daß** man das Gasgemisch mit einem der metallierten Hybridgele (III) oder (IV) gemäß obiger Definition unter Bedingungen, unter denen das abzutrennende Gas absorbiert werden kann, in Berührung bringt und danach das an dem Gel gebundene Gas desorbiert und das desorbierte Gas zurückgewinnt.

15. Verwendung nach Anspruch 14 zur Abtrennung von Sauerstoff aus der Luft zwecks Produktion von reinem Sauerstoff oder zwecks Entfernung des Sauerstoffs aus der Luft.

16. Nicht metalliertes Gel (III') gemäß Anspruch 9.

17. Verwendung des Gels (III') gemäß Anspruch 9 zur Reinigung von Gasen durch Adsorption von unerwünschten gasförmigen Verunreinigungen.

## Claims

1. Compound of formula (I): 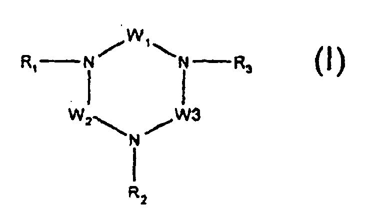 in which:
W₁, W₂ and W₃, which are identical or different, each represent, independently of one another, a divalent radical chosen from those represented by the general formula (A):
-[(CT₁T₂)ₙ-[N(R₄)]ₚ-(CT₃T₄)ₘ]ₗ- (A)
in which:
p represents an integer equal to 0 or to 1,
l represents an integer equal to 1 or to 2,
n and m, which are identical or different, each represent, independently of one another, an integer less than or equal to 3 and greater than or equal to 1, T₁, T₂, T₃ and T₄, which are identical or different, either each represent, independently of one another, a hydrogen atom, a linear or branched alkyl radical comprising from 1 to 15 carbon atoms or a [(hetero)aryl]alkyl radical comprising from 7 to 12 carbon atoms or else CT₁T₂ and/or CT₃T₄ represent a divalent group -(C=O)-,
R₁, R₂, R₃ and R₄ represent a radical represented by the general formula (B):
R₅-Si(X₁)(X₂) (X₃) (B)
in which:
X₁, X₂ and X₃, which are identical or different, each represent, independently of one another, a hydrogen atom, a halogen atom or an OR₆ radical, in which R₆ represents a hydrogen atom or an alkyl radical comprising from 1 to 4 carbon atoms,
R₅ represents a divalent radical derived from a saturated or unsaturated aliphatic hydrocarbonaceous chain comprising from 1 to 10 carbon atoms, in which chain are optionally inserted one or more structural links chosen from the arylene group or the -O-, -S-, -O-C(=O)-, -N(R₇)-C(=O)- or -N(R₇)- fragments, in which fragments R₇ represents a hydrogen atom, an aliphatic hydrocarbonaceous radical comprising from 1 to 6 carbon atoms, a benzyl radical or a phenethyl radical, said chain being unsubstituted or substituted by one or more radicals chosen from halogen atoms, the hydroxyl group, alkyl radicals comprising from 1 to 4 carbon atoms or benzyl or phenethyl radicals,
it being understood that
W₁, W₂ and W₃, which are identical or different, represent a radical of formula (A₁), corresponding to the formula (A) in which p is equal to 0 and the sum n + m is equal to 2 or to 3,
or W₁ represents a divalent radical of formula (A₂), corresponding to the formula (A) in which p is equal to 1 and the sum n + m is equal to 2 or to 3, and W₂ and W₃, which are identical or different, represent a radical of formula (A₁),
or W₁ and W₂, which are identical or different, represent a divalent radical of formula (A₂), corresponding to the formula (A) in which p is equal to 1 and the sum n + m is equal to 2 or to 3, and W₃ represents a radical of formula (A₁), corresponding to the formula (A) in which p is equal to 0 and the sum n + m is equal to 2 or to 3.

2. Compound of formula (Ia₁), corresponding to the formula (I) as defined in Claim 1 in which 1 is equal to 1 and either W₁, W₂ and W₃ each represent the divalent radical -CH₂-CH₂-CH₂- or else any one of the three groups W₁, W₂ or W₃ represents the divalent radical -CH₂-CH₂-CH₂- and each of the other two groups represents the divalent radical -CH₂-CH₂-.

3. Compound of formula (Ib₁), corresponding to the formula (I) as defined in Claim 1 in which 1 is equal to 1 and either any one of the three groups W₁, W₂ or W₃ represents the radical -CH₂-CH₂-CH₂-N(R₄)-CH₂-CH₂-, either one of the two remaining groups represents the radical -CH₂-CH₂- and the final group represents the radical -CH₂-CH₂-CH₂- or else any one of the three groups W₁, W₂ or W₃ represents the radical -CH₂-CH₂-CH₂-N(R₄)-CH₂-CH₂-CH₂- and the other two remaining groups each represent the radical -CH₂-CH₂-CH₂-.

4. Compound of formula (I) as defined in any one of Claims 1 to 3 in which the radical of formula (B) is a radical of formula (B₁):
- [CH₂-CH(OH)]_{y}-(CH₂)ₒ-(Q)_{q}-(CH₂)ᵣ-(Ar)ₛ-(CH₂)ₜ-(U)ᵤ-(CH₂)ᵥ-Si(X)₃ (B₁),
in which:
o, r, t and v, which are identical or different, each represent, independently of one another, an integer greater than or equal to 0 and less than or equal to 6,
y, q, s and u, which are identical or different, represent, independently of one another, an integer greater than or equal to 0 and less than or equal to 1,
Q and U, which are identical or different, each represent, independently of one another, an oxygen atom, a sulfur atom or one of the -O-CO-, -CO-O-, -NH-CO-, -CO-NH- or -NH- groups,
Ar represents an arylene group and in particular a phenylene group,
X represents a hydrogen atom or one of the methoxy or ethoxy radicals,
it being understood,
that, when q is equal to 1, the sum y+o is other than 0,
that, when q is equal to 1 and when u is equal to 0, the sum r+t+s+v is other than 0,
that, when u is equal to 1, v is other than 0,
that, when u is equal to 1 and when q is equal to 0, the sum y+o+r+s+t is other than 0,
that, when s is equal to 0 and when q and u are each equal to 1, the sum r+t is other than 0.

5. Compound of formula (I) as defined in Claim 4, in which the radical of formula (B₁) is chosen from the 3-silylpropyl, (4-silylphenyl)methyl, 3-(triethoxysilyl)propyl, 3-[[3-(tri-ethoxysilyl)propyl]oxy]-2-hydroxypropyl, [4-[[[3-(tri-ethoxysilyl)propyl]amino]-methyl]phenyl]methyl, [4-(triethoxysilyl)phenyl]propyl, 3-oxo-3-[[3-(triethoxy-silyl)propyl]oxy]propyl or 2-oxo-2-[[3-(triethoxy-silyl)propyl]amino]ethyl radicals.

6. Compounds of formula (I) as defined in one of Claims 1 to 5 with the following names:
1,4,8,11-tetrakis[3-(triethoxysilyl)propyl]-1,4,8,11-tetraazacyclotetradecane,
1,4,8,11-tetrakis[[4-(triethoxysilyl)phenyl]methyl]-1,4,8,11-tetraazacyclotetradecane,
tetra[3-(triethoxysilyl)propyl] 1,4,8,11-tetraazacyclotetradecane-1,4,8,11-tetrapropanoate,
1,4,8,11-tetrakis(3-silylpropyl)-1,4,8,11-tetraazacyclotetradecane,
1,4,8,11-tetrakis[(4-silylphenyl)methyl]-1,4,8,11-tetraazacyclotetradecane,
N₁,N₂,N₃,N₄-tetrakis[3-(triethoxysilyl)propyl]-1,4,8,11-tetraazacyclotetradecane-1,4,8,11-tetraacetamide,
4,11-bis[[4-(triethoxysilyl)phenyl]methyl]-1,4,8,11-tetraazacyclotetradecane-7,14-dione.

7. Process for the preparation of the compound of formula (I) as defined in any one of Claims 1 to 6, **characterized in that** a compound of formula (C)
Z-R'₅-Si(X₁)(X₂) (X₃) (C)
in which:
X₁, X₂ and X₃, which are identical or different, each represent, independently of one another, a hydrogen atom, a halogen atom or an OR₆ radical, in which R₆ represents a hydrogen atom or an alkyl radical comprising from 1 to 4 carbon atoms,
R'₅ represents a divalent radical derived from a saturated or unsaturated aliphatic hydrocarbonaceous chain comprising from 1 to 10 carbon atoms, in which chain are optionally inserted one or more structural links chosen from the arylene group or the -O-, -S-, -O-C(=O)-, -N(R₇)-C(=O)- or -N(R₇)- fragments, in which fragments R₇ represents a hydrogen atom, an aliphatic hydrocarbonaceous radical comprising from 1 to 6 carbon atoms, a benzyl radical or a phenethyl radical, the said chain being unsubstituted or substituted by one or more radicals chosen from halogen atoms, the hydroxyl group, alkyl radicals comprising from 1 to 4 carbon atoms or the benzyl or phenethyl radicals,
Z represents a functional group capable of reacting with a secondary amine functional group, -NH-, to form an N-C covalent bond,
is reacted with a compound of formula (I'): 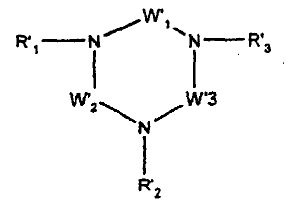 in which:
W'₁, W'₂ and W'₃, which are identical or different, each represent, independently of one another, a divalent radical chosen from those represented by the general formula (A'):
- [(CT₁T₂)ₙ-[N(R'₄)]ₚ-(CT₃T₄)ₘ]ₗ- (A')
in which,
l, p, n, m, T₁, T₂, T₃ and T₄ have the same definition as for the formula (A) as defined above and
R'₁, R'₂ and R'₃ and R'₄ represent a hydrogen atom.

8. Alternative form of the preparation process according to Claim 7 carried out with a compound of formula (C₁) :
Z'-(CH₂)ₒ-(Q)_{q}-(CH₂)ᵣ-(Ar)ₛ-(CH₂)ₜ-(U)ᵤ-(CH₂)ᵥ-Si(X)₃ (C₁)
in which:
o, q, r, s, t, u, v, Q, Ar, U and X have the same definition as for the formula (B₁) as defined above,
Z' represents either a halo radical, in particular a bromo radical or an iodo radical, or an oxiran-2-yl group or an ethenyl group,
the sum q+s is equal to 0 or to 1, it being understood that, when q is equal to 1 and when Z' represents a halo radical, o is other than 0,
that, when q is equal to 1 and when u is equal to 0, the sum r+s+t+v is other than 0,
that, when u is equal to 1, v is other than 0,
that, when u is equal to 1 and when q is equal to 0, the sum o+r+s+t is other than 0,
that, when s is equal to 0 and when q and u are each equal to 1, the sum r+t is other than 0, and
that the sum o+r+t+v is less than 6,
and more particularly with (triethoxy)(3-iodopropyl)silane, 2-[[[3-(triethoxysilyl)propyl]oxy]-methyl]oxirane, N-[[4-(bromomethyl)phenyl]methyl]-N-[3-(triethoxysilyl)propyl]amine, (triethoxy)[4-(iodomethyl)phenyl]silane, 3-(triethoxysilyl)propyl propenoate or N-[3-(triethoxy-silyl)propyl]-bromoacetamide.

9. Polysiloxane gel (III) formed of a compound of formula (I) as defined in one of Claims 1 to 6, incorporating the said compound and an organometallic complex of the said compound, **characterized in that** it is capable of being obtained from the hydrolysis of the said compound, to form a non-metallated polysiloxane gel (III'), followed by the action of a metal salt on the said gel (III'), and more particularly the polysiloxane gel (III₁) in which the metal element is chosen from cobalt or copper.

10. Polysiloxane gel (IV) formed from a compound of formula (I) as defined in one of Claims 1 to 6, incorporating the said compound and a metal complex of the said compound, **characterized in that** it is capable of being obtained from the action of a metal salt on the said compound, resulting in the formation of an organometallic complex of the said metal with the said compound, followed by the hydrolysis of the said complex, and more particularly the polysiloxane gel (IV₁) in which the metal element is chosen from cobalt or copper.

11. Process for the preparation of the polysiloxane gel (III) as defined in Claim 9, **characterized in that** a compound of formula (I) is subjected to hydrolysis, resulting in the non-metallated gel (III'), and then the gel (III') is reacted with a metal salt.

12. Process for the preparation of a polysiloxane gel (IV) as defined in Claim 10, **characterized in that** a compound of formula (I) is reacted with a metal salt, resulting in the formation of an organometallic complex of the said metal with the said compound, and then **in that** the said organometallic complex is subjected to hydrolysis.

13. Alternative form of the process as defined in either of Claims 11 and 12, in which the metal cation involved in the composition of the polysiloxane gel (III) or (IV) is chosen from the cations of U, Pu, Am, Eu, Ce, Cr, Gd, Mn, Fe, Co, Ni, Cu, Zn, Ag, Cd, Au, Hg or Pb and is preferably a Cu²⁺ or Co²⁺ cation.

14. Use of the metallated hybrid gels as defined in either of Claims 9 and 10 in separating a predetermined gas from a mixture of gases, **characterized in that** the said mixture of gases is brought into contact with one of the metallated hybrid gels (III) or (IV) as defined above under conditions which make possible the absorption of the said gas to be separated, followed by a phase of desorption of the said gas attached to the said gel and by a phase of recovery of the said desorbed gas.

15. Use as defined in Claim 14 applied to the separation of oxygen from the air, either for the purpose of producing pure oxygen or for the purpose of removing oxygen from the air.

16. Non-metallated gel (III') as defined in Claim 9.

17. Use of the gel (III') as defined in Claim 9 in purifying gases by adsorption of the undesirable gaseous impurities.
